# EUROPÄISCHE PATENTANMELDUNG

(11) **EP 4 817 914 A1**
(43) Veröffentlichungstag der Anmeldung: **07.10.2026**
(21) Anmeldenummer: 26162263.3
(22) Anmeldetag: 04.03.2026
(51) Int. Cl.: B60J 10/30

(54) **DICHTUNGSANORDNUNG, VERKLEIDUNGSELEMENT, DACHRAHMENDICHTUNG UND KRAFTFAHRZEUG**

(30) Priorität: 26.03.2025 DE 102025111811
(71) Anmelder: CQLT SaarGummi Technologies S.à.r.l., 5544 Remich (LU)
(72) Erfinder: Laux, Timo, 66809 Nalbach (DE)
(74) Vertreter: Patentanwälte Bernhardt / Wolff Partnerschaft mbB

(57) **Zusammenfassung**

Die Erfindung betrifft eine Dichtungsanordnung zur Abdichtung einer beweglichen Fensterscheibe einer Kraftfahrzeugtür (1), umfassend einen Türrahmen mit einem oberen Fensterrahmenabschnitt (3), eine an dem oberen Fensterrahmenabschnitt (3) befestigte Dachrahmendichtung (6) und ein seitlich an die Fensterscheibe angrenzendes Verkleidungselement. Um eine optisch ansprechende Erscheinungsform und eine zuverlässige Abdichtung zu ermöglichen, ist die Dachrahmendichtung (6) an einem freien Ende mit dem Verkleidungselement über eine Haltevorrichtung (12) verbunden.

## Beschreibung

Die Erfindung betrifft eine Dichtungsanordnung zur Abdichtung einer beweglichen Fensterscheibe einer Kraftfahrzeugtür nach dem Oberbegriff des Anspruchs 1 sowie ein Verkleidungselement, eine Dachrahmendichtung und ein Kraftfahrzeug.

Durch Benutzung sind Dichtungsanordnungen zur Abdichtung einer beweglichen Fensterscheibe einer Kraftfahrzeugtür bekannt, welche einen Türrahmen mit einem oberen Fensterrahmenabschnitt, eine an dem oberen Fensterrahmenabschnitt befestigte Dachrahmendichtung und ein seitlich an die Fensterscheibe angrenzendes Verkleidungselement umfassen. Aufgrund eines begrenzten Bauraums in einer Kraftfahrzeugtür, beispielsweise aufgrund eines angrenzenden Radkastens, kann sich oftmals die bewegliche Fensterscheibe nicht über die gesamte Länge der Kraftfahrzeugtür erstrecken. Für den übrigen Bereich wird daher oftmals ein Verkleidungselement in Form einer Zierblende seitlich angrenzend zu der Fensterscheibe vorgesehen.

Aufgabe der Erfindung ist es, eine Dichtungsanordnung zu schaffen, welche eine optisch ansprechende Erscheinungsform und eine zuverlässige Abdichtung ermöglicht.

Diese Aufgabe wird dadurch gelöst, dass die Dachrahmendichtung an einem freien Ende mit dem Verkleidungselement über eine Haltevorrichtung verbunden ist. Hierdurch wird gewährleistet, dass die Dachrahmendichtung an dem freien Ende gegenüber dem Verkleidungselement exakt und dauerhaft positioniert ist. Ungleichmäßige Spalte zwischen der Dachrahmendichtung und dem Verkleidungselement, welche die optische Erscheinungsform sowie die Dichtwirkung beeinträchtigen, werden hierdurch zuverlässig vermieden.

Vorteilhaft kann die Dachrahmendichtung auf einem Falz des oberen Fensterrahmenabschnitts aufgesteckt sein, wobei sich der Falz nicht bis zu dem freien Ende der Dachrahmendichtung erstreckt, in welchem die Haltevorrichtung angeordnet ist. Ein derartiger Falz wird in bekannter Weise durch einen abgewinkelten Rand des Fensterrahmenblechs einer Kraftfahrzeugtür gebildet, auf welchen die Dachrahmendichtung aufgesteckt wird. Der Falz erstreckt sich entlang der Fensteraussparung in der Kraftfahrzeugtür, so dass eine im Wesentlichen horizontal bzw. geradlinig verlaufende Dachrahmendichtung, welche sich in einem oberen Fensterrahmenabschnitt vorzugsweise bis zu einem Rand der Kraftfahrzeugtür erstreckt, an dem freien Ende keinen Kontakt mit dem Falz mehr hat. Dies ist insbesondere für eine bündigen Übergang zwischen der Kraftfahrzeugtür und der angrenzenden Kraftfahrzeugkarosserie von Vorteil ist. Das freie Ende der Dachrahmendichtung kann sich hierbei nicht mehr auf dem Falz abstützen, wird jedoch durch die Haltevorrichtung zuverlässig abgestützt und positioniert.

Besonders vorteilhaft kann die Haltevorrichtung als Rastverbindung mit einem von der Dachrahmendichtung vorstehenden ersten Halteelement zum Verrasten mit einem an dem Verkleidungselement angeordneten zweiten Halteelement ausgebildet sein. Durch diese Rastverbindung wird eine besonders einfache Montage der Dachrahmendichtung gegenüber dem Verkleidungselement ermöglicht.

In einer weiter vorteilhaften Ausgestaltung kann das erste Halteelement als Lasche mit einer Aussparung, insbesondere mit einem Durchgangsloch, ausgebildet sein, welche ein als Rastnase ausgebildetes zweites Halteelement hintergreift. Das erste Halteelement ist dabei vorteilhaft derart elastisch ausgebildet, dass bei einem Aufschieben des ersten Halteelements auf das zweite Halteelement die Lasche aufgrund der Rastnase, insbesondere aufgrund einer schrägen Führungsfläche an der Rastnase, elastisch seitlich ausgelenkt wird und anschließend die Lasche wieder zurückfedert, so dass die Rastnase in die Aussparung bzw. das Durchgangsloch haltend eingreift.

Weiter vorteilhaft kann die Dachrahmendichtung einen im Querschnitt U-förmigen Befestigungsabschnitt aufweisen, welcher insbesondere durch ein in einem Grundkörper der Dachrahmendichtung angeordnetes, im Querschnitt U-förmiges Stabilisierungselement verstärkt ist. Bei dem U-förmigen Stabilisierungselement kann es sich vorteilhaft um ein insbesondere gestrecktes Metallprofil handeln, durch welches der vorzugsweise aus einem Kunststoff wie EPDM oder TPE gebildete Grundkörper in dem Befestigungsabschnitt verstärkt ist und hierdurch eine sichere Befestigung auf einem Falz des oberen Fensterrahmenabschnitts ermöglicht. In diesem U-förmigen Befestigungsabschnitt kann an dem freien Ende der Dachrahmendichtung vorteilhaft ein Halteabschnitt des ersten Haltelements angeordnet sein, wodurch eine besonders stabile und insbesondere formschlüssige Verbindung in vertikaler Richtung ermöglicht wird. Weiter vorteilhaft kann der U-förmige Befestigungsabschnitt, insbesondere zusammen mit dem U-förmigen Stabilisierungselement, an dem freien Ende der Dachrahmendichtung ausgeklingt sein, wodurch die Integration des ersten Halteelements in die Dachrahmendichtung weiter verbessert wird. Hierzu kann auch vorgesehen sein, dass das erste Halteelement in dem U-förmigen Befestigungsabschnitt angeordnet ist, insbesondere in dem Bereich der Ausklinkung. Das erste Halteelement kann hierzu einen im Querschnitt T-förmigen Halteabschnitt aufweisen, dessen oberer horizontaler Balken in dem U-förmigen Befestigungsabschnitt vorgesehen ist.

Das Verkleidungselement kann als Glasscheibe oder Kunststoffblende ausgebildet sein, welche mit einem Kunststoff, insbesondere EPDM oder TPE, umspritzt ist. Zudem kann das Verkleidungselement an einem äußeren Rand welcher dem Türrahmen bzw. der Karosserie eines Kraftfahrzeugs zugewandt ist, bündig hierzu vorgesehen sein, so dass zwischen dem Verkleidungselement und der angrenzenden Karosserie keine Stufe vorhanden ist, was die ästhetische Erscheinungsform verbessert und Windgeräusche reduziert. An dem Verkleidungselement und insbesondere der Umspritzung kann das zweite Halteelement befestigt sein oder auch einstückig hiermit ausgebildet sein.

Des Weiteren wird ein Verkleidungselement für die zuvor beschriebene Dichtungsanordnung beansprucht, welches eine Glasscheibe oder Kunststoffblende umfasst, die mit einem Kunststoff, insbesondere EPDM oder TPE, umspritzt ist. Erfindungsgemäß ist an dem Verkleidungselement, insbesondere an der Umspritzung, ein Halteelement zu Befestigung der zuvor beschriebenen Dachrahmendichtung vorgesehen.

Es wird auch eine Dachrahmendichtung für die zuvor beschriebene Dichtungsanordnung beansprucht, welche einen im Querschnitt U-förmigen Befestigungsabschnitt umfasst. Erfindungsgemäß ist an einem freien Ende der Dachrahmendichtung in dem U-förmigen Befestigungsabschnitt ein Halteelement zur Befestigung der Dachrahmendichtung an einem Verkleidungselement vorgesehen.

Zudem wird ein Kraftfahrzeug beansprucht, welches eine Kraftfahrzeugtür mit einer beweglichen Fensterscheibe und einem angrenzenden Verkleidungselement sowie eine zuvor beschriebene Dichtungsanordnung umfasst. Erfindungsgemäß ist in einer Schließstellung der Kraftfahrzeugtür das Verkleidungselement bündig zu einer angrenzenden Kraftfahrzeugkarosserie ausgebildet, wodurch sich eine besonders ansprechende optische Erscheinungsform und reduzierte Windgeräusche ergeben.

Weitere Besonderheiten und Vorzüge der Erfindung ergeben sich aus der folgenden Beschreibung eines bevorzugten Ausführungsbeispiels anhand der Zeichnungen. Es zeigen:
- Fig. 1: eine Seitenansicht auf eine Kraftfahrzeugtür mit einer Dachrahmendichtung, einer Fensterscheibe und einem Verkleidungselement,
- Fig. 2: eine Detailansicht auf eine obere rechte Ecke der Kraftfahrzeugtür von Figur 1, wobei nur das Fensterrahmenblech und ein C-Säulen-Profil dargestellt sind,
- Fig. 3: einen perspektivischen Querschnitt durch die Kraftfahrzeugtür von Figur 2 entlang der Linie X, wobei zusätzlich die Dachrahmendichtung dargestellt ist,
- Fig. 4: einen perspektivischen Querschnitt durch die Kraftfahrzeugtür von Figur 2 entlang der Linie Y, wobei wie auch bei Figur 3 zusätzlich die Dachrahmendichtung dargestellt ist,
- Fig. 5: einen perspektivischen Querschnitt durch die Dachrahmendichtung mittig zu einem ersten Halteelement einer Haltevorrichtung,
- Fig. 6: einen Querschnitt durch die Kraftfahrzeugtür von Figur 1 auf Höhe des Querschnitts von Figur 5,
- Fig. 7: eine Rückansicht auf die obere rechte Ecke der Kraftfahrzeugtür von Figur 1, wobei das Fensterrahmenblech nicht dargestellt ist und
- Fig. 8: die Detailansicht von Figur 7, wobei nur das Verkleidungselement gezeigt ist.

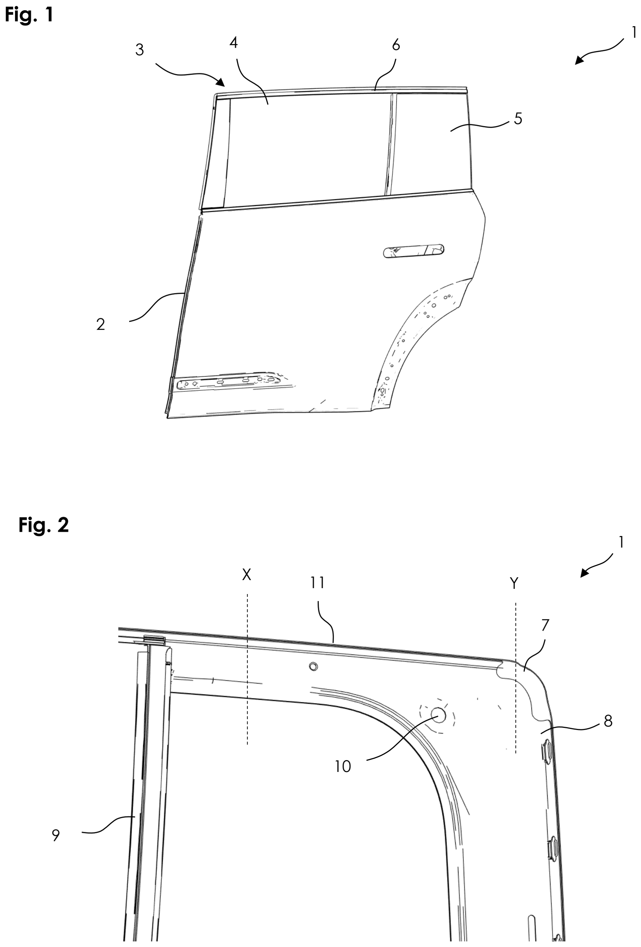

In Figur 1 ist eine Seitenansicht auf eine Kraftfahrzeugtür 1 gezeigt. Die Kraftfahrzeugtür 1 umfasst einen Türrahmen 2 mit einem oberen, im wesentlichen horizontalen Fensterrahmenabschnitt 3, eine versenkbare Fensterscheibe 4 sowie ein seitlich an die Fensterscheibe 4 angrenzendes Verkleidungselement 5. Um den Fensterrahmenabschnitt 3 gegenüber der Fensterscheibe 4 sowie einer hier nicht dargestellten Fahrzeugkarosserie abzudichten, ist an dem oberen Fensterrahmenabschnitt 3 eine Dachrahmendichtung 6 befestigt, welches sich mit dem hinteren Ende über die gesamte Länge des Verkleidungselements 5 erstreckt und mit diesem bündig abschließt.

In Figur 2 ist eine Detailansicht auf eine obere rechte Ecke der Kraftfahrzeugtür 1 von Figur 1 gezeigt, wobei nur das aus einem Innenblech 7 und einem Außenblech 8 bestehende Fensterrahmenblech sowie ein C-Säulen-Profil 9 dargestellt sind. In dem Bereich rechts oben ist das Außenblech 8 ausgeklinkt und das Innenblech 7 zu einem Radius gebogen. Zudem ist ein Befestigungsloch 10 vorgesehen, welches in dem Außenblech 8 angeordnet ist und zur Befestigung des Verkleidungselements 5 dient. Wie sich aus dem Vergleich der Figuren 1 und 2 ergibt, kann die Dachrahmendichtung 6 hierbei nicht bis zum oberen rechten Ende auf dem Innenblech 7 bzw. dem Außenblech 8 abgestützt werden, da sich weder das Innenblech 7 noch das Außenblech 8 bis in die Ecke erstrecken.

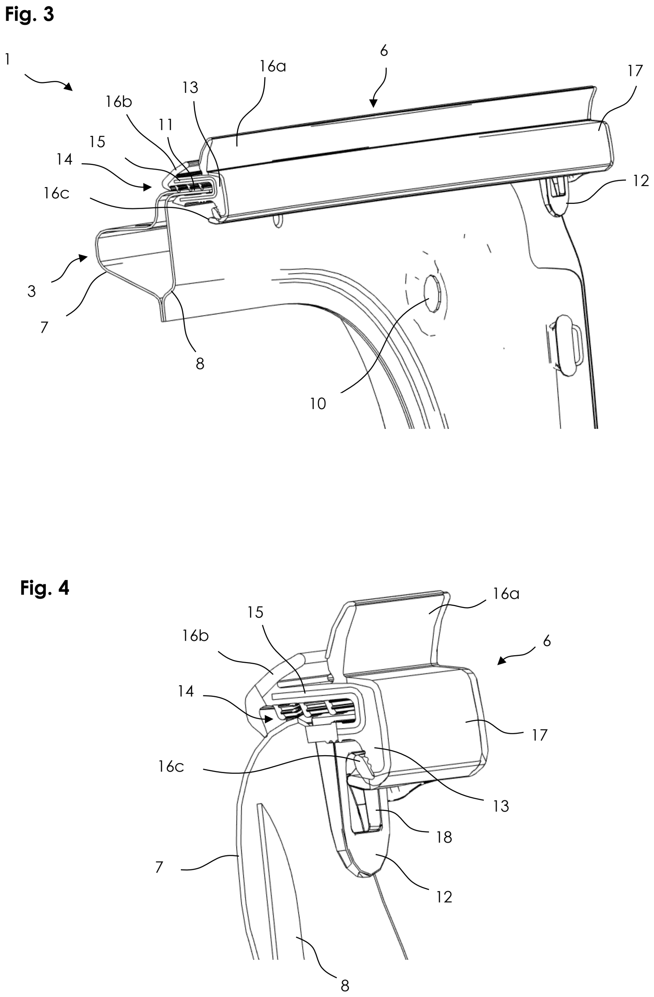

In Figur 3 ist ein perspektivischer Querschnitt durch die Kraftfahrzeugtür 1 von Figur 2 entlang der Linie X gezeigt, wobei zusätzlich die Dachrahmendichtung 6 dargestellt ist. Wie dort zu entnehmen ist, ist die Dachrahmendichtung 6 auf einem Falz 11 des oberen Fensterrahmenabschnitts 3 aufgesteckt. Der Falz 11 wird durch das Blech 7 und das Außenblech 8 gebildet, welche entlang einer Oberseite des Fensterrahmenabschnitts 3 nach außen abgewinkelt verlaufen. Wie sich aus Figur 2 ergibt, verläuft dieser Falz in dem Eckbereich jedoch im einem Radius nach unten, welcher fertigungstechnisch bedingt ist. Um die Dachrahmendichtung 6 an dem freien Ende dennoch abstützen zu können, ist eine Haltevorrichtung vorgesehen, welche eine Befestigung des freien Endes der Dachrahmendichtung 6 an dem Verkleidungselement 5 ermöglicht und von welcher hier das erste Halteelement 12 gezeigt ist.

Zur sicheren Befestigung der Dachrahmendichtung 6 an dem Flansch 11 weist die Dachrahmendichtung 6 einen profilförmigen Grundkörper 13 mit einem im Querschnitt U-förmigen Befestigungsabschnitt 14 auf. In dem Grundkörper 13 ist ein im Querschnitt U-förmiges Stabilisierungselement 15 vorgesehen, welches den U-förmigen Befestigungsabschnitt 14 umgibt und vorzugsweise aus einem gestreckten Metallprofil oder einem Hartkunststoff gebildet ist. Zudem sind an der Innenseite des U-förmigen Befestigungsabschnitts 14 mehrere Haltelippen vorgesehen, welche hier nicht beziffert sind. Durch das U-förmige Stabilisierungselement 15 sowie die Haltelippen kann die Dachrahmendichtung 6 besonders zuverlässig kraftschlüssig auf dem Falz 11 gehalten werden.

Zudem umfasst die Dachrahmendichtung 6 mehrere Dichtlippen zur Abdichtung gegenüber der Fensterscheibe 4, dem Verkleidungselement 5 sowie einer Fahrzeugkarosserie, von welchen hier die Dichtlippen 16a, 16b, 16c gekennzeichnet sind. An einer Außenseite der Dachrahmendichtung 6 ist eine Optikmischung 17 vorgesehen, es könnte auch alternativ ein Zierrat verwendet werden.

In Figur 4 ist ein perspektivischer Querschnitt durch die Kraftfahrzeugtür 1 von Figur 2 entlang der Linie Y gezeigt, wobei wie bei Figur 3 zusätzlich die Dachrahmendichtung 6 dargestellt ist. Wie auch aus Figur 2 zu entnehmen ist, ist in diesem Eckbereich das Außenblech 8 ausgeklinkt und es ist kein Falz mehr vorhanden, welcher in den U-förmigen Befestigungsabschnitt 14 vorsteht. Folglich wird das hier gezeigte freie Ende der Dachrahmendichtung 6 nicht mehr an dem Innenblech 7 oder dem Außenblech 8 gehalten. Um dennoch eine Abstützung dieses freien Endes der Dachrahmendichtung 6 zu ermöglichen, ist das erste Halteelement 12 vorgesehen, welches mit einem oberen Abschnitt vorzugsweise formschlüssig haltend in den U-förmigen Befestigungsabschnitt 14 vorsteht und an einem unteren Abschnitt in Form einer Lasche ein Durchgangsloch aufweist. Die Funktionsweise wird in Bezug auf die nachfolgenden Figuren noch im Detail beschrieben.

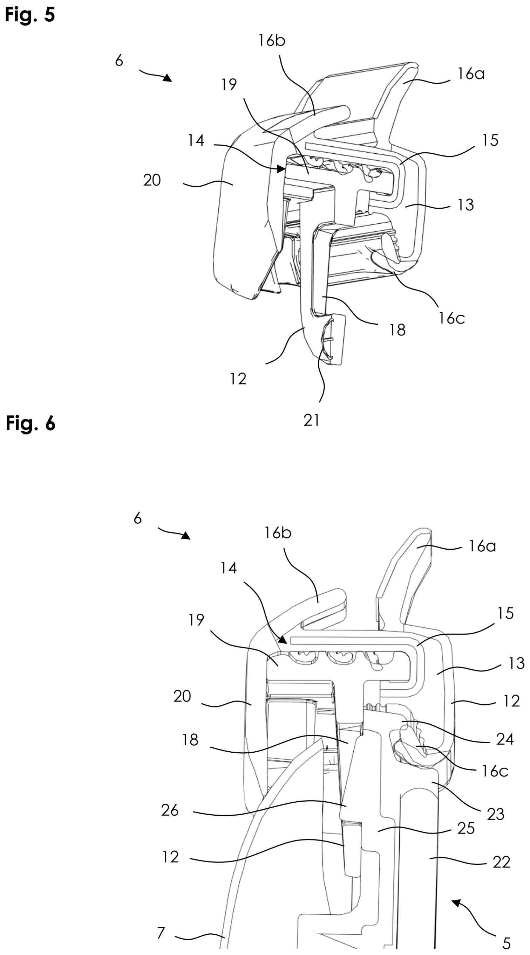

In Figur 5 ist ein perspektivischer Querschnitt durch die Dachrahmendichtung 6 mittig zu dem ersten Halteelement 12 der Haltevorrichtung gezeigt. Wie dort zusätzlich zu den in Figur 4 gezeigten Merkmalen zu nehmen ist, bildet der obere Abschnitt des ersten Halteelements 12 einen Halteabschnitt und ist T-förmig ausgebildet, wobei der horizontale Balken 19 in dem U-förmigen Befestigungsabschnitt 14 angeordnet ist. Zudem ist an dem freien Ende eine Endkappe 20 vorgesehen, welche vorzugsweise an die Dachrahmendichtung 6 angespritzt ist und den U-förmigen Befestigungsabschnitt auf Höhe des ersten Halteelements 12 verschließt.

Um eine einfache Positionierung der Dachrahmendichtung 6 gegenüber dem Verkleidungselement 5 bei der Montage zu ermöglichen, ist an dem ersten Halteelement 12 unterhalb des Durchgangslochs 18 eine Markierung 21 in Form eines Kreuzes vorgesehen. Hierzu korrespondierend kann an dem Verkleidungselement eine weitere, hier nicht dargestellte Markierung, beispielsweise ein Strich, vorgesehen sein.

In Figur 6 ist ein Querschnitt durch die Kraftfahrzeugtür 1 von Figur 1 auf Höhe des Querschnitts von Figur 5 gezeigt. Wie der Darstellung zu entnehmen ist, umfasst das Verkleidungselement 5 eine Glasscheibe 22 mit einer Umspritzung 23 aus einem Kunststoff, insbesondere EPDM oder TPE.

Einstückig integriert in die Umspritzung 23 ist zudem ein zweites Halteelement 25, welches zusammen mit dem ersten Halteelement 12 die Haltevorrichtung in Form einer Rastverbindung bildet. Wenn die Dachrahmendichtung 6 aufgesteckt wird, wird die Lasche mit dem Durchgangsloch 18 über eine Rastnase 26 des zweiten Halteelements 25, insbesondere über eine schräge Führungsfläche an der Rastnase 26, seitlich ausgelenkt, bis die Lasche des ersten Halteelements 12 zurückfedert und die Rastnase 26 haltend in das Durchgangsloch 18 eingreift. Über den horizontalen Balken 19, welcher formschlüssig in dem U-förmigen Befestigungsabschnitt 14 angeordnet ist und zudem Aussparungen für die Dichtlippen des U-förmigen Befestigungsabschnitt 14 aufweisen kann, wird damit eine formschlüssige, besonders stabile Befestigung der Dachrahmendichtung 6 gegenüber dem Verkleidungselement 5 erreicht.

Wie sich aus dem Vergleich mit dem in Figur 3 gezeigten Querschnitt zudem ergibt, ist der U-förmige Befestigungsabschnitt 14 zusammen mit dem U-förmigen Stabilisierungselement 15 an dem freien Ende der Dachrahmendichtung 6 ausgeklinkt. Beispielsweise ist der hier gezeigte untere Schenkel des U-förmigen Stabilisierungselements 15 deutlich gekürzt, so dass das erste Halteelement 12 mit dem horizontalen Balken 19 in den U-förmigen Befestigungsabschnitt 14 in diesem Bereich eingeschoben werden kann.

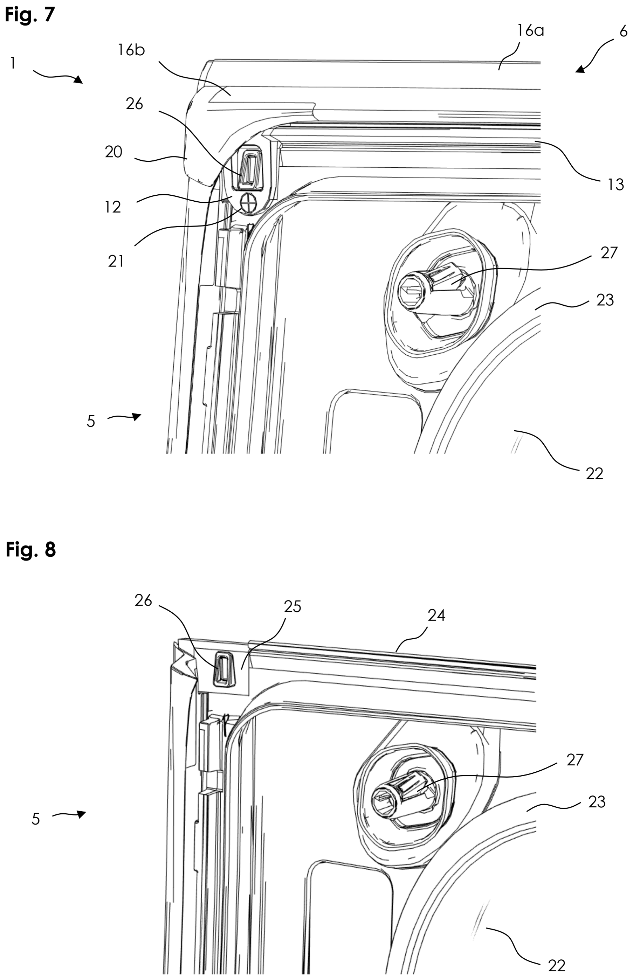

In Figur 7 ist eine Rückansicht auf die obere rechte Ecke der Kraftfahrzeugtür 1 von Figur 1 gezeigt, wobei das aus dem Innenblech 7 und dem Außenblech 8 bestehende Fahrzeugblech nicht dargestellt ist. Wie auch schon in Bezug auf Figur 6 beschrieben, ist das erste Halteelement 12 in einer Ausklinkung des Grundkörpers 13 der Dachrahmendichtung 6 angeordnet und hintergreift die Rastnase 26 des Verkleidungselements 5 formschlüssig haltend.

In Figur 8 ist eine Detailansicht von Figur 7 gezeigt, wobei nur das Verkleidungselement 5 dargestellt ist. Wie dort zu entnehmen ist, ist das zweite Halteelement 25 zusammen mit der Rastnase 26 einstückig mit dem Verkleidungselement 5 ausgebildet. Vorteilhaft kann das zweite Halteelement 25 in der Umspritzung 23 der Glasscheibe 22 oder weiteren hieran angespritzten Komponenten angeordnet sein, um eine weitestgehend vorgefertigte, einfach zu montierend Konstruktion zu ermöglichen.

### Bezugszeichenliste:

- 1: Kraftfahrzeugtür
- 2: Türrahmen
- 3: Fensterrahmenabschnitt
- 4: Fensterscheibe
- 5: Verkleidungselement
- 6: Dachrahmendichtung
- 7: Innenblech
- 8: Außenblech
- 9: C-Säulen-Profil
- 10: Befestigungsloch
- 11: Falz
- 12: Erstes Halteelement
- 13: Grundkörper
- 14: U-förmiger Befestigungsabschnitt
- 15: U-förmiges Stabilisierungselement
- 16a, 16b, 16c: Dichtlippen
- 17: Optikmischung
- 18: Durchgangsloch
- 19: Horizontaler Balken
- 20: Endkappe
- 21: Markierung
- 22: Glasscheibe
- 23: Umspritzung
- 24: Vorsprung
- 25: Zweites Halteelement
- 26: Rastnase
- 27: Haltestift

## Patentansprüche

1. Dichtungsanordnung zur Abdichtung einer beweglichen Fensterscheibe (4) einer Kraftfahrzeugtür (1), umfassend einen Türrahmen (2) mit einem oberen Fensterrahmenabschnitt (3), eine an dem oberen Fensterrahmenabschnitt (3) befestigte Dachrahmendichtung (6) und ein seitlich an die Fensterscheibe (4) angrenzendes Verkleidungselement (5),
**dadurch gekennzeichnet,**
**dass** die Dachrahmendichtung (6) an einem freien Ende mit dem Verkleidungselement (5) über eine Haltevorrichtung (12, 25) verbunden ist.

2. Dichtungsanordnung nach Anspruch 1,
**dadurch gekennzeichnet,**
**dass** die Dachrahmendichtung (6) auf einem Falz (11) des oberen Fensterrahmenabschnitts (3) aufgesteckt ist, wobei sich der Falz (11) nicht bis zu dem freien Ende der Dachrahmendichtung (6) erstreckt, in welchem die Haltevorrichtung (12, 25) angeordnet ist.

3. Dichtungsanordnung nach einem der vorhergehenden Ansprüche,
**dadurch gekennzeichnet,**
**dass** die Haltevorrichtung (12, 25) als Rastverbindung mit einem von der Dachrahmendichtung (6) vorstehenden ersten Halteelement (12) zum Verrasten mit einem an dem Verkleidungselement (5) angeordneten zweiten Halteelement (25) ausgebildet ist.

4. Dichtungsanordnung nach Anspruch 3,
**dadurch gekennzeichnet,**
**dass** das erste Halteelement (12) als Lasche mit einer Aussparung, insbesondere einem Durchgangsloch (18), ausgebildet ist, welche ein als Rastnase (26) ausgebildetes zweites Haltelement (25) hintergreift.

5. Dichtungsanordnung nach einem der vorhergehenden Ansprüche,
**dadurch gekennzeichnet,**
**dass** die Dachrahmendichtung (6) einen im Querschnitt U-förmigen Befestigungsabschnitt (14) aufweist, welcher insbesondere durch ein in einem Grundkörper (13) der Dachrahmendichtung (6) angeordnetes, im Querschnitt U-förmiges Stabilisierungselement (15) verstärkt ist.

6. Dichtungsanordnung nach Anspruch 5,
**dadurch gekennzeichnet,**
**dass** ein Halteabschnitt (19) des ersten Halteelements (12) an dem freien Ende der Dachrahmendichtung (6) in dem U-förmigen Befestigungsabschnitt (14) angeordnet ist.

7. Dichtungsanordnung nach Anspruch 6,
**dadurch gekennzeichnet,**
**dass** der U-förmige Befestigungsabschnitt (14), insbesondere zusammen mit dem U-förmigen Stabilisierungselement (15), an dem freien Ende der Dachrahmendichtung (6) ausgeklingt ist.

8. Dichtungsanordnung nach einem der Ansprüche 3 bis 7,
**dadurch gekennzeichnet,**
**dass** das erste Halteelement (12) in dem U-förmigen Befestigungsabschnitt (14) angeordnet ist, insbesondere in dem Bereich der Ausklinkung.

9. Dichtungsanordnung nach einem der vorgehergehenden Ansprüche,
**dadurch gekennzeichnet,**
**dass** das Verkleidungselement (5) eine Glasscheibe (22) oder Kunststoffblende umfasst, welche mit einem Kunststoff, insbesondere EPDM oder TPE, umspritzt ist.

10. Dichtungsanordnung nach Anspruch 9,
**dadurch gekennzeichnet,**
**dass** das zweite Halteelement (25) einstückig mit dem Verkleidungselement (5) ausgebildet ist.

11. Verkleidungselement (5) für eine Dichtungsanordnung nach einem der Ansprüche 1 bis 10, umfassend eine Glasscheibe (22) oder Kunststoffblende, welche mit einem Kunststoff, insbesondere EPDM oder TPE, umspritzt ist, **dadurch gekennzeichnet,**
**dass** an dem Verkleidungselement (5), insbesondere an der Umspritzung (23), ein Halteelement (25) zur Befestigung einer Dachrahmendichtung (6) vorgesehen ist.

12. Dachrahmendichtung (6) für eine Dichtungsanordnung nach einem der Ansprüche 1 bis 10, umfassend einen im Querschnitt U-förmigen Befestigungsabschnitt (14),
**dadurch gekennzeichnet,**
**dass** an einem freien Ende der Dachrahmendichtung (6) in dem U-förmigen Befestigungsabschnitt (14) ein Haltelement (12) zur Befestigung der Dachrahmendichtung (6) an einem Verkleidungselement (5) vorgesehen ist.

13. Kraftfahrzeug, umfassend eine Kraftfahrzeugtür (1) mit einer beweglichen Fensterscheibe (4) und einem angrenzenden Verkleidungselement (5) sowie einer Dichtungsanordnung nach einem der Ansprüche 1 bis 10,
**dadurch gekennzeichnet,**
**dass** in einer Schließstellung der Kraftfahrzeugtür (1) das Verkleidungselement (5) bündig zu einer angrenzenden Kraftfahrzeugkarosserie ausgebildet ist.
